# EUROPÄISCHE PATENTSCHRIFT

(11) **EP 1 445 852 B1**
(45) Veröffentlichungstag und Bekanntmachung des Hinweises auf die Patenterteilung: **26.09.2012**
(21) Anmeldenummer: 04100458.1
(22) Anmeldetag: 06.02.2004
(51) Int. Cl.: H02M 1/42, H02M 3/157

(54) **Verfahren und Vorrichtung zur aktiven Leistungsfaktorkorrektur**
Device and method for active power factor correction
Dispositif et procédé pour la correction active du facteur de puissance

(30) Priorität: 07.02.2003 DE 10305207
(43) Veröffentlichungstag der Anmeldung: 11.08.2004
(73) Patentinhaber: BAUMÜLLER NÜRNBERG GMBH, D-90482 Nürnberg (DE); Fraunhofer-Gesellschaft zur Förderung der angewandten Forschung e.V., 80686 München (DE)
(72) Erfinder: Baumüller, Andreas, 90480, Nürnberg (DE); März, Martin, Dr., 90491, Nürnberg (DE)
(74) Vertreter: Götz, Georg Alois

(56) Entgegenhaltungen:
- EP-A- 0 805 548
- DE-A1- 10 111 696
- US-A- 5 638 265
- CHEN ZHOU ET AL: "DESIGN AND ANALYSIS OF A HYSTERETIC BOOST POWER FACTOR CORRECTION CIRCUIT1" PROCEEDINGS OF THE ANNUAL POWER ELECTRONICS SPECIALISTS CONFERENCE. (PESC). SAN ANTONIO, JUNE 11 - 14, 1990, NEW YORK, IEEE, US, Bd. VOL. 2 CONF, 21, 11. Juni 1990 (1990-06-11), Seiten 800-807, XP000170349 ISSN: 0275-9306
- BUSO S ET AL: "Simple digital control improving dynamic performance of power preregulators" POWER ELECTRONICS SPECIALISTS CONFERENCE, 1997. PESC '97 RECORD., 28TH ANNUAL IEEE ST. LOUIS, MO, USA 22-27 JUNE 1997, NEW YORK, NY, USA,IEEE, US, Bd. 1, 22. Juni 1997 (1997-06-22), Seiten 103-109, XP010241534 ISBN: 0-7803-3840-5
- GARCIA O ET AL: "High efficiency PFC converter to meet EN61000-3-2 and A14" INDUSTRIAL ELECTRONICS, 2002. ISIE 2002. PROCEEDINGS OF THE 2002 IEEE INTERNATIONAL SYMPOSIUM ON JULY 8-11, 2002, PISCATAWAY, NJ, USA,IEEE, Bd. 3, 8. Juli 2002 (2002-07-08), Seiten 975-980, XP010598014 ISBN: 0-7803-7369-3

## Beschreibung

Die Erfindung betrifft ein Stromregelverfahren, das zur aktiven Filterung und/oder zur Leistungsfaktor-Vorregelung (Power Factor Correction - PFC) geeignet ist. Dabei wird ein an sich bekannter Aufwärtswandler (Hochsetzsteller) mit einem taktweise ansteuerbaren Schaltglied, beispielsweise Schalttransistor, verwendet, der beispielsweise mittels einer pulsweitenmodulierten Steuerspannung ein- und ausschaltbar ist. Im Rahmen des Stromregelverfahrens wird der Eingangsstrom des Aufwärtswandlers seiner Eingangsspannung mittels des getakteten Schaltglieds und eines diesem vorgelagerten Soll-/Istwertvergleichs nachgeführt. Dabei wird eine Regeldifferenz aus einer Führungsgröße und einem Istwert für den Eingangsstrom des Aufwärtswandlers gebildet.

Die seit dem 01.01.2001 geltenden europäischen Normen EN 61000-3-2 und EN 61000-3-2/A14 definieren Grenzwerte für den Oberschwingungsgehalt des Netzstromes für Geräte, die für den Verkauf an die allgemeine Öffentlichkeit vorgesehen sind und die eine Wirkleistungsaufnahme von 75 Watt und darüber haben. Für die Praxis bedeutet das, dass die einfache Netzgleichrichtung mittels Brückengleichrichter und nachfolgender Siebung in vielen Fällen nicht zulässig ist, weil der Netzstrom in diesem Fall pulsierend ist und einen hohen Oberschwingungsgehalt aufweist (vgl. Ralf Kories und Heinz Schmidt-Walter "Taschenbuch der Elektrotechnik, Grundlagen und Elektronik", 4. Auflage,Verlag Harri Deutsch, Seite 518 ff.).

In J. Merfert "Stored-duty-ratio control for power factor correction", 14th Annual Applied Power Electronics Conference, Proceedings APEC '99, Seite 1123-1129, ist der Einsatz digitaler Regelverfahren für die Leistungsfaktorkorrektur beschrieben. Diese beruhen darauf, dass mit Hilfe eines Software-Regelalgorithmus das Tastverhältnis eines digital erzeugten Rechtecksignals so gesteuert wird, dass die gewünschte Funktion "Leistungsfaktorkorrektur" erreicht wird. Die bekannten digitalen Regelverfahren erfordern nicht nur einen erheblichen Rechenzeitaufwand für die Regelung, sie setzen auch eine schnelle, mit der PFC-Schaltfrequenz arbeitende, digitale PWM-Einheit voraus. Zudem wird bei bislang eingesetzten digitalen Regelverfahren ein großer Teil der Rechenzeit auf die Beherrschung nicht idealer Eingangsspannungsverläufe verwendet, wie sie in realen Netzanwendungen regelmäßig auftreten.

Ferner sind aktive PFC-Regelverfahren bekannt (vgl. Philip C. Todd "UC3854 Controlled Power Factor Correction Circuit Design" in UNITRODE APPLICATION NOTE U -134), die auf analoger Regelung mit speziell dafür vorgesehenen, analogen Hardwarekomponenten basieren. Es werden die Arten "Spitzenstromregelung" und "Durchschnittsstromregelung" vorgeschlagen. Dafür wird ein Schaltungsprinzip offenbart, dessen zentraler Kern ein Analog-Multiplizierer für Eingangsspannung, Eingangsstrom, Iststrom und Ausgangsstrom bildet. Auf der Basis des Multiplizierer-Ausgangs wird das Schaltglied angesteuert. Neben dem integrierten PFC-Schaltkreis ist noch eine zusätzliche, aufwendige Hardwarebeschaltung (z. B. in Form von Flip-Flops, Operationsverstärker, Oszillator, usw.) notwendig (siehe beispielsweise Philip C. Todd, "UC3854 Controlled Power Factor Correction Circuit Design" in UNITRODE APPLICATION NOTE U-134, Seite 3-276). Dies bedeutet hohe Kosten für Bauteile und benötigten Platinenplatz.

Aus der anfangs genannten Fundstelle "Taschenbuch der Elektrotechnik ..." ist eine gattungsgemäße Leistungsfaktor-Vorregelung bekannt, bei der das Schaltglied unmittelbar aus einem Pulsweitenmodulator angesteuert bzw. getaktet wird. Dieser wiederum wird von einem PI-Regler gesteuert, von dem ein Eingang mit einem Multiplizierglied verbunden ist. Darin wird im Rahmen einer Spannungsregelung ein heruntergeteilter Wert der Eingangsspannung des Aufwärtswandlers (Sollwert) mit einem Wert multipliziert, der abhängig von dem Vergleich der Aufwärtswandler-Ausgangsspannung mit einer Referenzspannung ist.

Mit den vorbekannten Verfahren ist es nicht ohne weiteres möglich, mit in Betrieb auftretenden, von der idealen Sinusform abweichenden Eingangssignalformen eine gut angepasste Leistungsfaktorkorrektur durchzuführen, ohne dass zusätzlicher Änderungsaufwand, das heißt Anpassungen in der Auswerteschaltung notwendig wäre.

In DE 101 11 696 (Infineon Technologies AG) sind Verfahren zur Regelung einer Leistungsfaktorkorrekturschaltung für Brückengleichrichter mit nachgeschaltetem Sieb-Kondensator beschrieben. Ein Schaltelement wird derart angesteuert, dass der Eingangsstrom des Gleichrichters einen sinusförmigen Verlauf aufweist. Die Korrekturschaltung ist mit einem Mikrocontroller mit Analog-Digital-Wandler-Schnittstellen realisiert, worüber dem Mikrocontroller ein Wert für den Iststrom am Gleichrichterausgang vermittelt wird. Die gesamte Stromregelung wird vom Mikrocontroller alleine ausgeführt. Dieser steuert über einen binären Ausgang das Schaltelement zur Herbeiführung der Leistungsfaktorkorrektur an.

EP 0 805 548 A (Switched Reluctance Drives Ltd. u.a.) beschreibt eine Leistungsfaktorkorrekturschaltung, bei der das Schaltglied direkt vom Pulsweiten-Modulationsausgang einer digital ausgeführten Leistungsfaktor-Korrekturschaltung angesteuert wird. Die Eingangsspannung eines Aufwärtswandlers, der mit der Korrekturschaltung zusammenwirkt, ist einem digitalen Komparator dieser Korrekturschaltung zugeführt.

US 5 638 265 A (Gabor) beschreibt eine Stromversorgung aus dem Niederspannungsnetz mit Wandlung einer Harmonische aufweisenden Wechselspannung in Gleichspannung. Über einen Vollweg-Brückengleichrichter wird ein Aufwärtswandler mit Spule, Schaltglied und Ladekondensator gespeist. Das Schaltglied wird direkt von einer auf der Basis von Pulsweitenmodulation arbeitenden Steuereinrichtung betätigt. Diese besitzt einen Analogeingang zur Bildung einer Regeldifferenz aus Strom-Istwert und einem Referenzsignal. Letzteres wird über digitale Signalverarbeitung mit Zähler, Festwertspeicher und Digital/Analog-Wandler generiert. Die digitale Signalverarbeitung wird eingangsseitig mit Binärsignalen gespeist, welche Ergebnisse einer Abtastung des Wechselstromnetzes auf Nulldurchgänge und Schwellwertdurchschreitungen sind.

Der Erfindung liegt die Aufgabe zugrunde, eine etwa für aktive Filterung oder PFC geeignete Stromregelung zu schaffen, die sich durch eine einfache Struktur und einen geringen Aufwand an Hardwarekomponenten auszeichnet. Zur Lösung werden das im Patentanspruch 1 angegebene Stromregelverfahren und der im Patentanspruch 9 angegebene Stromregelkreis vorgeschlagen. Optionale, zweckmäßige Ausgestaltungen der Erfindung ergeben sich aus den abhängigen Ansprüchen.

Demnach wird ein erfindungsgemäßer Kern durch die Vergleichsoperation ausgemacht, welcher einer vorher gebildeten Regelstrom-Regeldifferenz und einem konstanten Referenzwert unterworfen werden. Stimmen Regeldifferenz und Referenzwert im Wesentlichen überein, wird das Schaltglied vom Vergleicher zum Durchschalten und damit zum Kurzschließen des Aufwärtswandler-Ausgangskreises angesteuert. Andernfalls wird das Schaltglied zum Öffnen angesteuert, so dass eine Energieübertragung von der Aufwärtswandler-Induktivität auf die Ausgangskapazität des Aufwärtswandlers stattfinden kann. Ein mit der Erfindung erzielter Vorteil besteht darin, dass sich die Vergleichsoperationen mit auf dem Markt leicht verfügbaren, kostengünstigen Standard-Komparatoren auf der Basis von Operationsverstärkern realisieren lassen.

Gemäß Erfindung wird zur Erzeugung der Regel-Führungsgröße ein digitaltechnischer Rechenprozess verwendet, der beispielsweise auf einem Standard-Mikrocontroller ablaufen kann. Die Rechen-Eingangsgrößen lassen sich durch Analog-Digitalwandlung etwa der Aufwärtswandler-Eingangs- und/oder Ausgangsspannung gewinnen. Die Ausgangsgrößen des Rechenprozesses können unter Digital-Analogwandlung einem Summierglied zur Bildung der Regeldifferenz zur Verfügung gestellt werden. Der genannte Mikrocontroller bildet mit dem intern ablaufenden Rechenprozess gleichsam einen digitalen Sollwertgeber zur Generierung der Führungsgröße. Damit kann für das Sollwertsignal oder die Führungsgröße ein beliebiger Verlauf erzeugt werden. So lässt sich beispielsweise zur Realisierung der PFC die Eingangsspannung des Aufwärtswandlers oder der sonstigen betroffenen Baugruppe als Sollwertverlauf heranziehen. Damit wird ermöglicht, am Eingang des Aufwärtswandlers oder der betroffenen Baugruppe ein ohmsches Verhalten zu erzeugen. Die Verwendung dieser Eingangsgroesse zur Erzeugung der Fuehrungsgroesse ermoeglicht das Resultat eines ausreichenden ohmschen Regelverhaltens mit sehr geringen Rechenaufwand. Dies ermoeglicht eine sehr gute Kostenreduzierung, da diese Funktion in den meisten (Standard-) Mikrokontrollern als Zusatz mitererledigt werden kann. Ein weiterer Vorteilbesteht in der Vereinfachung des Schaltungsaufbaus.

Die genannten Schnittstellen lassen sich, soweit sie nicht bereits auf Standard-Mikrocontrollern baulich integriert sind (wie beispielsweise Pulsweitenmodulatoren), durch einfache Beschaltung wie RC-Glieder am Ausgang des Pulsweitenmodulators oder Analog-/Digitalwandler am Eingang des Mikrocontrollers realisieren. Mit dieser Erfindungsausbildung wird der Vorteil erzielt, dass die Notwendigkeit zusätzlicher, aufwendigerer Auswertebaugruppen wie Flip-Flops, Oszillatoren, Multiplizierer, Dividierer und vieles andere wegfällt. Mit dieser Ausbildung wird der Vorteil der Vereinfachung der gesamten Stromregelung beispielsweise zur aktiven PFC bei einer minimalen Anzahl von einfachen Hardwarekomponenten erzielt. Ein weiterer Vorteil besteht im verminderten Platinenplatzbedarf. Zur Generierung der Führungsgröße wird im digitalen Rechenprozess lediglich ein geringer Aufwand an Rechenzeit benötigt. Dies eröffnet den Weg zum Einsatz des genannten Standard-Mikrocontrollers, der dabei mit einer Verarbeitungsbreite von acht Datenbits auskommt. Dabei kann er noch zusätzliche Tasks ausführen, etwa zu einer Motorsteuerung/Motorregelung im Rahmen eines elektrischen Antriebssystems. Dies erspart wiederum den Aufwand eines zusätzlichen PFC-Reglers, zumal bei vielen Standard-Mikrocontrollern ein Pulsweitenmodulator-Ausgang ohnehin vorhanden ist.

Die Erfindung basiert prinzipiell auf eine an sich bekannte Current-Mode-Steuerung, wobei gemäß Erfindung der analoge Sollwertverlauf (Führungsgröße) digital von einem Mikrocontroller erzeugt wird. Das resultierende Prinzip besteht also in einem digitalen, selbstschwingenden Stromregler mit digitaler Generierung des Sollwerts, der in eine analoge Führungsgröße für einen nachfolgenden, analogen Soll-/Istwertvergleich gewandelt wird.

Mit der erfindungsgemäßen Regelung ist eine Verarbeitung aller möglichen Eingangssignalformen, welche die Regel-Sollwerte bilden, unabhängig von deren jeweiliger Gestalt möglich. Im Rahmen der Erfindung liegt auch ein Betrieb der Stromregelung als aktives Filter mit vorgegebenen Übertragungs- und Ausgabefunktionen. Dabei können diese unabhängig von der jeweiligen Eingangssignalform entsprechend einem definierten Algorithmus der erfindungsgemäßen Regelung gestaltet werden (beispielsweise Erzeugung eines Stromverlaufs mit Sinushalbwellen, der an den Verlauf der Eingangsspannung angelehnt ist). Die hier aufgezeigte Regelungsmethodik hat so ihre Gültigkeit bei Funktion als aktiver Netzfilter mit angepasster Ausgabe (z. B. Sinushalbwellen). Sie ist aber nicht nur zur PFC, sondern auch als Chopper (elektronische Zerhackerschaltung) für elektrodynamische Bremsanwendungen und auch sonstige Stell- und Regelanwendungen (beispielsweise stromgeregelter Leistungswandler) in der elektrischen Antriebstechnik einsetzbar.

Mit der erfindungsgemäßen Regelungsmethodik wird der Weg dazu eröffnet, dass das Eingangsspannungssignal des Aufwärtswandlers (Hochsetzstellers) direkt zur Leistungsfaktorkorrektur verwendet wird, indem es dem digitalen Rechenprozess, insbesondere digitalen Sollwertgeber (Mikrocontroller) als Eingangsgröße zugeführt wird.

Mit besonderem Vorteil wird das Vergleichsergebnis an den Takteingang des Schaltglieds in Form einer Binärentscheidung ausgegeben, welche mit einer voreingestellten Schalthysterese behaftet ist. Durch eine solche Hysterese am Soll-Istwert-Komparator lässt sich im Zusammenhang mit der Steilheit des Stromistwerts der Schaltfrequenzbereich festlegen. Wird die Schalthysterese verändert (beispielsweise durch Anpassung der Widerstandswerte eines eingangsseitig am Komparator liegenden Hysterese-Widerstandsnetzwerkes), kommt es zu einer entsprechenden Variation der Schaltfrequenz.

Das der erfindungsgemäßen Regelungsmethodik inhärente Jittern der Schaltfrequenz lässt sich auch durch ein unterschiedliches Steigungsverhalten des Stromistwertes erzielen. Bei einem Eingangssignal mit Dreieck-Kurvenform würde kein Jittern stattfinden, weil die Steigung immer gleich ist. Bei sinusförmigem Eingangssignal erfolgt das Jittern der Schaltfrequenz automatisch aufgrund der sich ändernden Spannung und der sich dadurch ändernden Steilheit des Stromanstiegs in der Aufwärtswandler/PFC-Induktivität (beispielsweise Drossel). Dies hat den zusätzlichen Vorteil, dass bei geringerer Steilheit des Stromanstiegs (was bei sinusförmigen Eingangssignalen in den Bereichen der Fall ist, wo der Strom groß ist) die Schaltfrequenz automatisch erhöht wird. Ein damit erzielter Vorteil besteht darin, dass die eingesetzte Aufwärtswandler/PFC-Induktivität nicht so schnell in die Sättigung gerät. Mit anderen Worten, durch "geschicktes Jittern" der Schaltfrequenz gerät die genannte Induktivität erst später in die Sättigung, womit der Vorteil erzielt wird, dass geringere Induktivitätswerte benötigt werden.

Auf der Basis der Erfindung lässt sich dieses Jittern also durch Beeinflussung bzw. Veränderung der Breite der Schalthysterese bewirken, als auch selbsttätig durch Veränderung der Steilheit des Stromistwertsignals erreichen. Ein damit erzielter Vorteil besteht in der leichteren Einhaltung von Normen und Anforderungen der elektromagnetischen Verträglichkeit (EMV) für leitungsgebundene Störungen im Bereich der Schaltfrequenz und deren Harmonischen, da diese Störungen bei einer entsprechenden EMV-Messung breitbandig gestreut auftreten.

Im Rahmen der Erfindung lässt sich also das Jittern der Schaltfrequenz einstellen. Bei Soll- oder Istwertsignalen mit veränderlicher Steigung erfolgt dieses Jittern selbsttätig. Dadurch wird das Einhalten von EMV-Normen erleichtert. Zusätzlich reduziert sich die benötigte Induktivität der eingesetzten PFC-Drossel, da sich an Stellen geringen Stromanstiegs (das heißt z. B. bei sinusförmigem Stromverlauf, bei großen Stromwerten) die Schaltfrequenz erhöht, somit öfter geschalten wird und weniger Energie pro Schaltvorgang transportiert werden muss. Infolgedessen tritt eine Sättigung der PFC-Drossel (mit magnetischem Kern) erst später ein.

Durch die gemäß Erfindung verminderte Anzahl an Hardwarekomponenten wird der Vorteil einer höheren Funktionszuverlässigkeit und -sicherheit erzielt. Die Erfindung eröffnet den Weg , mittels einer spezifischen Hardwarestruktur ein digitales Regelverfahren zur PFC-Ansteuerung zu realisieren.

Weitere Einzelheiten, Merkmale, Merkmalskombinationen, Wirkungen und Vorteile auf der Basis der Erfindung ergeben sich aus der nachfolgenden Beschreibung bevorzugter Ausführungsformen der Erfindung sowie aus den Zeichnungen. Diese zeigen in:
- Figur 1: anhand eines groben Blockschaltbilds das Grundprinzip der digitalen Stromregelung für PFC gemäß Erfindung,
- Figur 2: schaltungstechnische Einzelheiten und vorteilhafte Ausgestaltungen für die Stromregelung nach Figur 1,
- Figur 3: ein Zeitdiagramm für die Verläufe von Soll- und Istwert im Rahmen einer Hysterese, und
- Figur 4: zum Verständnis weitere, an sich bekannte schaltungstechnische Einzelheiten des PFC-Aufwärtswandlers.

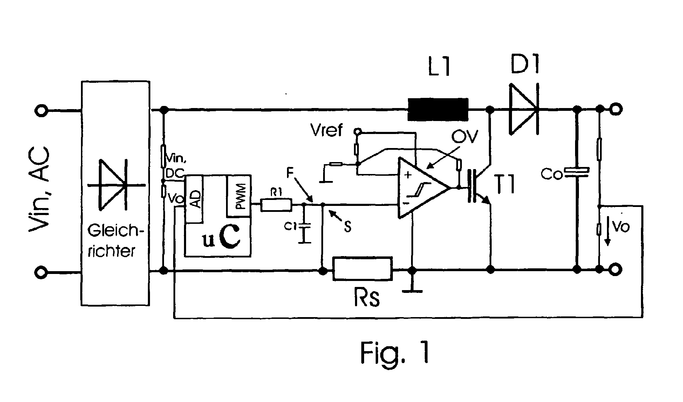

Die in Figur 1 dargestellte Stromregelung kann beispielsweise zur Leistungsfaktorkorrektur bei einem Frequenzumrichter Einsatz finden.

Gemäß Figur 1 wird eine Netzwechselspannung V_{in,ac} über einen Gleichrichter GI, beispielsweise ein Vollweggleichrichter, in eine gleichgerichtete Eingangsspannung V_{in,dc} für die weitere Verarbeitung im nachfolgenden Aufwärtswandler umgesetzt. Diese Eingangsspannung liegt parallel an der Aufwärtswandler/Hochsetzsteller-Drossel L1 und am Eingang des Mikrocontrollers µC. Dessen Eingang ist mit einem Analog/Digital-Wandler AD realisiert, der baulich mit dem Mikrocontroller integriert sein kann. Den hier relevanten Ausgang des Mikrocontrollers µC bildet ein Pulsweitenmodulator PWM, der ebenfalls baulich mit dem Mikrocontroller µC integriert sein kann. Der PWM-Ausgang wird über ein erstes RC-Glied R1,C1 in ein analoges Gleichspannungssignal umgewandelt und dem negativen Eingang eines als Komparator dienenden Operationsverstärkers OV zugeführt. Zur Realisierung des Soll-/Istwert-Vergleichs bzw. zur Bildung der Regeldifferenz ist dem Minuseingang des Operationsverstärkers das am Neben- bzw. Shunt-Widerstand Rs abgegriffene Strom-Istwertsignal zugeführt. Der positive Eingang des Operationsverstärkers OV ist zur Ausübung der Komparator-Funktion mit einer Quelle für eine Referenzspannung V_{Ref} verbunden. Mittels des Ausgangs des Komparators bzw. Operationsverstärkers OV wird das Schaltglied T1, beispielsweise ein Schalttransistor, angesteuert, wobei die Drossel L1 näherungsweise gegen Masse kurzgeschlossen wird. Während der Einschaltphase des Schaltglieds T1 fällt die Eingangsspannung V_{in,dc} an der Drossel L1 ab, und der diese durchfließende Strom steigt linear an. Wird das Schaltglied vom Komparator-Ausgang zum Abschalten angesteuert, so fließt der Strom aus der Drossel L1 über die unmittelbar nachgeschaltete Diode D1 weiter und lädt den Ausgangs- bzw. Zwischenkreiskondensator C0. Mit anderen Worten, während der Einschaltphase wird Energie in die Drossel L1 geladen. Diese wird während der Ausschalt- bzw. Sperrphase des Schaltglieds T1 an den Zwischenkreiskondensator C0 übertragen. Zusätzlich wird noch eine Spannungsregelschleife gebildet, indem die Zwischenkreisspannung Vo dem Analog-/Digital-Wandler AD zugeführt und damit dem Mikrocontroller µC zur weiteren Verarbeitung, Auswertung und Überwachung rückgekoppelt wird. Diese Rueckkopplung dient der Sicherheit und ist nicht fuer die prinzipielle Funktion dieses PFC-Ansteuerverfahrens notwendig.

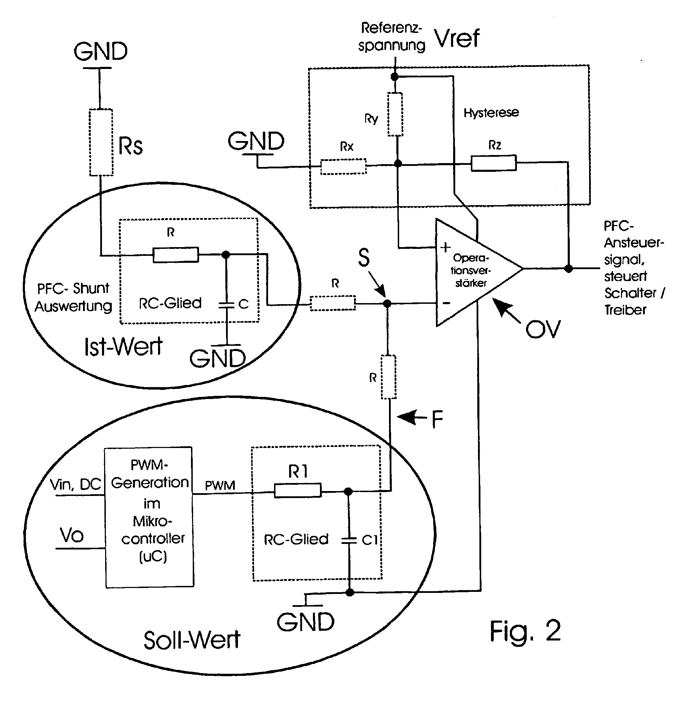

Gemäß der detaillierten Darstellung in Figur 2 ist dem Shunt-Messwiderstand Rs ein weiteres RC-Glied R,C nachgeschaltet, um Störungen auszublenden und das gemessene Stromistwert-Signal zu glätten. Der Plus-Eingang des Operationsverstärker-Komparators OV ist zur Realisierung einer Komparator-Schalthysterese über ein Hysterese-Widerstandsnetzwerk Rx, Ry, Rz mit der Referenzspannung V_{Ref} verbunden. Die Widerstände sind einerseits parallel an den Plus-Eingang des Operationsverstärker-Komparators OV gelegt. Andererseits ist der erste Widerstand Rx mit Masse, der zweite Widerstand Ry mit dem Ausgang der Referenzspannungsquelle VRef und der dritte Widerstand mit dem Ausgang des Operationsverstärker-Komparators OV verbunden.

Gemäß Figur 2 erfolgt die Sollwert-Generierung über einen Rechenprozess mit nachfolgender PWM-Generation im Mikrocontroller µC. Bei Standard-Mikrocontrollern ist meist ein integriertes PWM-Modul vorhanden. Darüber wird im Zusammenwirken mit dem ersten RC-Glied R1, C1 eine analoge Führungsgröße F erzeugt. Die Geschwindigkeit und Auflösung üblicher PWM-Module oder auch externer PWM-Bausteine ist für die Erzeugung der relativ langsam veränderlichen Führungsgröße F (Sollwertsignal) völlig ausreichend. Die spezifischen Eigenschaften (Tastverhältnis usw.) des PWM-Signals und damit die Höhe der Führungsgröße F wird im Rechenprozess des Mikrocontrollers µC per Software auf der Basis der gemessenen Eingangsspannung V_{in, dc} erzeugt. Die gleichgerichtete Eingangsspannung V_{in, dc} wird parallel noch von der Drossel L1 erfasst.

Nachfolgend wird die Funktionsweise der Erfindung, deren Regelungsmethodik auf dem Arbeiten mit kontinuierlichem Stromfluss, genauer im Continuous Conduction Mode (CCM) basiert, anhand des Ablaufes eines Schaltzyklusses weiter erläutert.

Gemäß Figuren 1 und 2 wird das gleichgerichtete Eingangssignal V_{in,dc} vom Mikrocontroller µC noch vor der Drossel L1 erfasst und über den Analog-/Digitalwandler digitalisiert eingelesen. Über den im Mikrocontroller ablaufenden Rechenprozess wird ein Sollwert/eine Führungsgröße F als Ausgangsergebnis generiert und digital als pulsweitenmodulierte Impulsfolge ausgegeben. Dabei kann das Tastverhältnis das Ergebnis des den Eingangswert verarbeitenden Rechenprozesses repräsentieren. Das digitale Ausgangssignal des Mikrocontrollers µC in Form der PWM-Impulsfolge wird mittels des nachgeschalteten, ersten RC-Gliedes R1, C1 in die analoge Führungsgröße F in Form eines analogen Gleichspannungssignals umgewandelt. Letzteres muss ein gegenläufiges Vorzeichen zu dem Stromistwert besitzen, der vom Shunt-Messwiderstand RS abgeleitet ist. Am negativen Eingang des Operationsverstärker-Komparators OV erfolgt der Vergleich des Stromistwerts mit der analogen Führungsgröße F. Dabei können sich die folgenden drei Zustände ergeben:
1. Analoge Führungsgröße F = Stromistwert
2. Analoge Führungsgröße F > Stromistwert
3. Analoge Führungsgröße F < Stromistwert

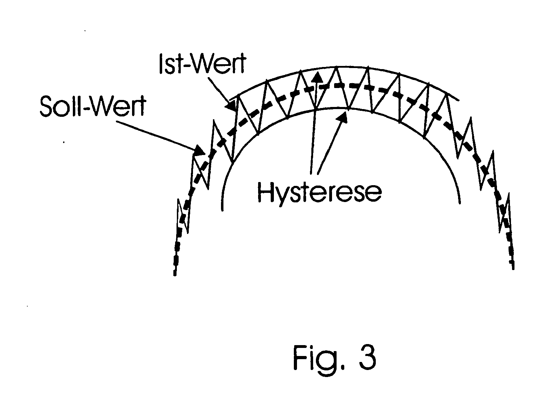

Zu Anfang wird Zustand 1 angenommen. Der Operationsverstärker-Komparator OV gibt ein entsprechendes Signal derart aus, dass das Schaltglied T1 geschlossen ist. Somit steigt der Stromistwert durch den Shunt-Messwiderstand RS schneller an, als die Führungsgröße F. Dies führt zu einem energetischen Aufladen der Drossel L1. Infolgedessen wird der obige Zustand 3 erreicht. Vorher wurde der Zustand 1 so lange beibehalten, als sich der Stromistwert innerhalb des Hysterese-Toleranzbandes befand, das gemäß Figur 3 etwa symmetrisch um den Sollwert (Führungsgröße F) aufgespannt ist. Das Hysterese-Toleranzband bzw. die Komparator-Schalthysterese ist durch die Dimensionierung der oben beschriebenen Widerstände Rx, Ry, Rz des Hysterese-Widerstandsnetzwerks eingestellt. Dadurch lässt sich, wie in Figur 3 beispielhaft anhand eines sinusförmigen Signalverlaufs gezeigt, das Ansprechverhalten der Regelung festlegen.

Aufgrund der Schalthysterese wird der Umschaltzustand in Zustand 3 erst dann eingenommen, wenn der Stromistwert die Obergrenze des Hysterese-Toleranzbandes gemäß Figur 3 übersteigt; dabei wird das vorher im Zustand 1 vom Komparator OV ausgegebene Signal negiert, und das Schaltglied T1 öffnet sich. Infolgedessen gibt die Drossel L1 die gespeicherte Energie an den Zwischenkreiskondensator C0 und an etwaige, weitere Schaltungselemente (beispielsweise Frequenzumrichter) ab. Dies führt zu einem Abfall des Stroms, der über den Shunt-Messwiderstand RS gemessen wird. Dies bedeutet eine Abnahme des Stromistwerts und einen Übergang in Zustand 2. Dieser Vorgang wird zunächst wiederum bis zur Untergrenze des Hysterese-Toleranzbandes analog Figur 3 toleriert. Bei Unterschreiten dieser Untergrenze erfolgt erneut eine Negierung des Ausgangssignals des Komparators OV. Damit wird das Schaltglied T1 zum Schließen angesteuert, und die Drossel L1 wird von neuem mit Energie geladen. Dies kann zu einem erneuten Ansteigen des Stromistwerts führen (Zustand 3), wobei die Obergrenze des Hysterese-Toleranzbands gemäß Figur 3 erneut überschritten wird. Dann negiert sich der binäre Ausgabewert des Komparators OV wiederum, wodurch das Schaltglied zur Herbeiführung einer Unterbrechung gegen Masse angesteuert wird. Bei negierenden Schaltungselementen ist ein entsprechend entgegengesetzter Verlauf der Ansteuerung zu waehlen.

Die Ausgangs- bzw. Zwischenkreisspannung Vo beispielsweise eines Frequenzumrichters darf nur innerhalb vorbestimmter Grenzen schwanken, die sich hardwaremäßig oder softwaremäßig über den Mikrocontroller µC überwachen lassen. Dazu ist die Zwischenkreisspannung dem Analog/Digitalwandler AD des Mikrocontrollers µC zugeführt (vgl. Figur 1). Eine zu starke Erhöhung der Zwischenkreisspannung Vo kann zur Schädigung des Zwischenkreiskondensators C0 führen. Dies kann aufgrund eines zu hohen Spannungsanstiegs passieren, wenn der Zwischenkreiskondensator C0 zu stark aus der Drossel L1 nachgeladen wird. Dem kann mit den im Mikrocontroller µC implementierten Gegenoperationen begegnet werden, die Mechanismen zum Schutz des Zwischenkreises und des nachfolgenden Schaltungsbereichs auslösen. Umgekehrt können bei zu niedriger Spannung Vo am Zwischenkreis vom Mikrocontroller Führungsgrößen generiert und ausgegeben werden, die zu einem Öffnen des Schaltglieds T1 führen. Im Mikrocontroller können noch weitere Schutz- und auch Diagnosefunktionalitäten bezüglich des Zwischenkreises implementiert sein. Die Regelgroesse kann ebenfalls dazu verwendet werden den undefinierten Anfangszustand beim Einschalten zu steuern.

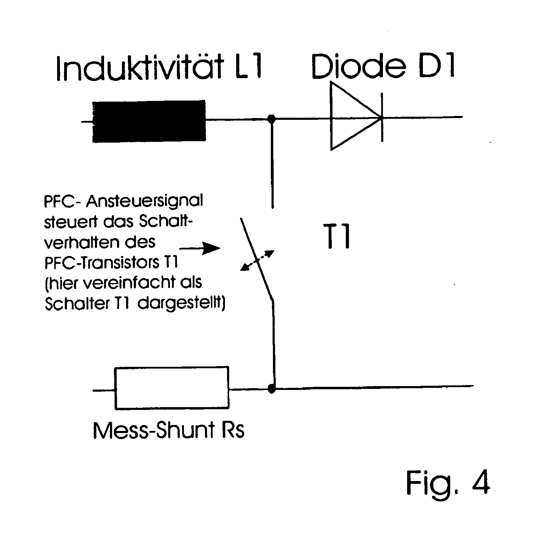

Figur 4 dient zur Veranschaulichung des an sich bekannten Schemas des Aufwärtswandlers mit Shunt-Messwiderstand RS zur PFC. Erfindungsgemäß wird das PFC-Ansteuersignal für das Schaltglied T1 von einem Vergleich der aus dem Soll-/Istwertvergleich gewonnenen Regeldifferenz mit der Referenzspannung V_{Ref} beeinflusst. Die Regeldifferenz wird naturgemäß von der Führungsgröße F maßgeblich mitbestimmt, welche gemäß beschriebenem Ausführungsbeispiel der Erfindung vom Mikrocontroller µC als digitaler Sollwertgenerator erzeugt wird.

Der in den Figuren 1, 2 & 4 gezeigte Schaltungsaufbau ist für die Erfindung nur ein Beispiel vieler möglicher Varianten. Das vorgestellte Regelungsverfahren ist im Rahmen der Erfindung auch mit potenzialgetrennter Ansteuerung und/oder andersartiger Stromistwererfassung (z.B. LEM-Wandler/Hall-Effekt anstelle von Mess-Shunt Rs) einsetzbar.

### Bezugszeichenliste

- V_{in,ac}: Netzwechselspannung
- GL: Gleichrichter
- V_{in,dc}: gleichgerichtete Eingangsspannung
- L1: Drossel
- µC: Mikrocontroller
- AD: Analog-/Digitalwandler
- PWM: Pulwsweitenmodulator
- R1, C1: RC-Glied
- OV: Operationsverstärker/Komparator
- Rx, Ry, Rz: Hysterese-Widerstandsnetzwerk
- RS: Shunt-Messwiderstand
- V_{Ref}: Referenzspannung
- T1: Schaltglied
- D1: Diode
- C0: Zwischenkreiskondensator
- Vo: Zwischenkreisspannung
- R, C: weiteres RC-Glied
- F: Führungsgröße
- S: Summierstelle

## Patentansprüche

1. Stromregelverfahren zur aktiven Filterung und/oder zur Leistungsfaktor-Vorregelung unter Verwendung eines ein getaktetes Schaltglied (T1) aufweisenden Aufwärtswandlers, dessen Eingangsstrom seiner Eingangsspannung (Vin,dc) mittels des getakteten Schaltglieds (T1) und eines diesem vorgelagerten Soll-/Istwertvergleichs nachgeführt wird, bei dem eine Regeldifferenz aus einer Führungsgröße (F) und einem Istwert für den Eingangsstrom des Aufwärtswandlers gebildet wird, wobei das Schaltglied (T1) abhängig von einem Vergleich des jeweiligen Werts der Regeldifferenz mit einem Referenzwert (Vref) getaktet wird, und
wobei zur Generierung der Führungsgröße (F) ein digitaltechnischer Rechenprozess verwendet wird, dessen Eingangsgrößen aus wenigstens einer analogen Aufwärtswandler-Eingangsspannung (Vin,dc) unter Analog-Digitalwandlung (AD) gewonnen werden, und als Rechenergebnis eine abhängig von den Eingangsgrößen modulierte Impulsfolge (PWM) erzeugt wird, **dadurch gekennzeichnet, dass** die modulierte Impulsfolge (PWM) in einen Analogwert umgewandelt und dann zur Bildung der Regeldifferenz zur Verfügung gestellt wird, wobei die Impulsfolge zur Bildung eines analogen Gleichsignals gemittelt wird, das als Führungsgröße (F) verwendet wird.

2. Stromregelverfahren nach Anspruch 1, **gekennzeichnet durch** eine Kombination mit einer Spannungsregelung und/oder -überwachung, bei welcher die Aufwärtswandler-Ausgangsspannung (Vo) über Analog-Digitalwandlung (AD) dem digitaltechnischen Rechenprozess als Eingangsgröße zur Beeinflussung des digitalen Rechenergebnisses zugeführt wird.

3. Stromregelverfahren nach Anspruch 2, **dadurch gekennzeichnet, dass** der digitaltechnische Rechenprozess Operationen derart umfasst, dass auf Überhöhung der Aufwärtswandler-Ausgangsspannung (Vo) mit einem Takten beziehungsweise Ansteuern des Schaltglieds (T1) zu dessen Durchschalten reagiert wird.

4. Stromregelverfahren nach einem der vorangehenden Ansprüche, **dadurch gekennzeichnet, dass** dem Rechenprozess als Eingangsgröße die Aufwärtswandler-Eingangsspannung (Vin,dc) digitalisiert direkt zugeführt wird.

5. Stromregelverfahren nach einem der vorangehenden Ansprüche, **dadurch gekennzeichnet, dass** vor dem Soll-/Istwertvergleich der Istwert einer Mittelung oder sonstigen Tiefpass-Filterung (RC) unterzogen wird.

6. Stromregelverfahren nach einem der vorangehenden Ansprüche, **dadurch gekennzeichnet, dass** das jeweilige Vergleichsergebnis an den Takteingang des Schaltglieds (T1) als Binärentscheidung ausgegeben wird, welche mit einer voreingestellten Schalthysterese getroffen wird.

7. Stromregelverfahren nach Anspruch 6, **dadurch gekennzeichnet, dass** die Einstellung der Schalthysterese zum vorspezifizierten Variieren der Takt- beziehungsweise Schaltfrequenz für das Schaltglied (T1) insbesondere nach Art eines Jitterns verwendet wird.

8. Stromregelverfahren nach Anspruch 7, **gekennzeichnet durch** eine Einstellung der Schalthysterese derart, dass sich bei mit niedriger Steigung ändernden Istwerten die Taktfrequenz für das Schaltglied (T1) erhöht.

9. Stromregelkreis zur aktiven Filterung und/oder Leistungsfaktor-Vorregelung mit einem ein taktweise ansteuerbares Schaltglied (T1) aufweisenden Aufwärtswandler mit einem Strommesswiderstand (Rs) zum Abgreifen eines Stromistwerts, der einer Summierstelle (S) zur Bildung einer Regeldifferenz mit einer Strom-Führungsgröße (F) zugeführt ist, um davon abhängig das Schaltglied (T1) zur Nachführung des Eingangsstrom des Aufwärtswandlers seiner Eingangsspannung (Vin,dc) anzusteuern, zur Durchführung des Verfahren nach einem der vorangehenden Ansprüche, wobei das Schaltglied (T1) zu seinem Ansteuern beziehungsweise Takten mit dem Ausgang eines Komparators (OV) verbunden ist, der eingangsseitig zum Vergleich der Regeldifferenz mit einem Referenzsignal (Vref) ausgebildet und/oder beschaltet ist, und
wobei zur Generierung der Führungsgröße (F) ein digitaler Sollwertgeber angeordnet ist, der mit Schnittstellen (AD) zur digitalisierten Erfassung wenigstens der analogen Aufwärtswandler-Eingangsspannung (Vin,dc) versehen oder verbunden ist, **dadurch gekennzeichnet, dass** der digitale Sollwertgeber zur Ausgabe digital-analog gewandelter Ausgangssignale (F) mit einer Schnittstelle (PWM,R1,C1) versehen oder verbunden ist, welche einen vom Datenverarbeitungsmodul gesteuerten Pulsweitenmodulator (PWM) und ein diesem nachgeordnetes Tiefpass-Filter (R1,C1) umfasst, und dass die Ausgangssignale (F) der Summierstelle (S) als die Strom-Führungsgröße (F) zugeführt sind, wobei den Ein- und Ausgabe-Schnittstellen (AD;PWM,R1,C1) ein dem Sollwertgeber internes Datenverarbeitungsmodul für Ein- und Ausgangsdaten zwischengeordnet ist.

10. Stromregelkreis nach Anspruch 9, **dadurch gekennzeichnet, dass** die Schnittstelle (AD) zur digitalisierten Erfassung analoger Eingangssignale mit der Eingangs- und/oder Ausgangsspannung (Vin,dc;Vo) des Aufwärtswandlers verbunden ist.

11. Stromregelkreis nach Anspruch 9 oder 10, **dadurch gekennzeichnet, dass** der digitale Sollwertgeber mit einem Mikrocontroller (µC) realisiert ist, in dem ein Pulsweitenmodulator (PWM) und/oder Analog-/Digitalwandler (AD) baulich integriert sind.

12. Stromregelkreis nach einem der vorangehenden Ansprüche, **dadurch gekennzeichnet, dass** zwischen dem Strommesswiderstand (Rs) und der Summierstelle (S) ein Tiefpass- Filter (RC) eingefügt ist.

13. Stromregelkreis nach einem der vorangehenden Ansprüche, **dadurch gekennzeichnet, dass** der Komparator (OV) mit einem Widerstandsnetzwerk (Rx,Ry,Rz) versehen oder verbunden ist, das zur Erzeugung einer Komparator-Schalthysterese ausgebildet ist.

14. Stromregelkreis nach Anspruch 13, **dadurch gekennzeichnet, dass** das Referenzsignal (Vref) aus einer Referenzspannungsquelle über das Widerstandsnetzwerk (Rx,Ry,Rz) dem Komparator-Eingang zugeführt ist.

15. Stromregelkreis nach Anspruch 14, **gekennzeichnet durch** eine Dimensionierung der Widerstände (Rx,Ry,Rz) des Schalthysterese-Widerstandsnetzwerks derart, dass sich bei mit niedriger Steigung ändernden Istwerten die Taktfrequenz für das Schaltglied (T1) erhöht.

## Claims

1. A current regulation process for active filtering and/or for power factor correction using an upwards converter that has a clocked circuit component (T1) and of which the input current of its input voltage (Vin,dc) is tracked by means of the clocked circuit component (T1) and an ideal/actual value comparison upstream of the latter, wherein a control difference is formed from a reference variable (F) and an actual value for the input current of the upwards converter, the circuit component (T1) being clocked dependently upon a comparison of the respective value of the control difference with a reference value (Vref), and
in order to generate the reference variable (F) a digital calculation process being used the input variables of which are obtained from at least one analogue upwards converter input voltage (Vin,dc) with analogue to digital conversion (AD), and a pulse sequence (PWM) modulated dependently upon the input variables being generated as a calculation result, **characterised in that** the modulated pulse sequence (PWM) is converted into an analogue value and is then made available to form the control difference, the pulse sequence being averaged to form an analogue identical signal that is used as a reference variable (F).

2. The current regulation process according to Claim 1, **characterised by** a combination with voltage control and/or monitoring in which the upwards converter output voltage (Vo) is delivered by means of analogue to digital conversion (AD) to the digital calculation process as an input variable for influencing the digital calculation result.

3. The current regulation process according to Claim 2, **characterised in that** the digital calculation process includes operations such that there is a reaction to inflation of the upwards converter output voltage (Vo) with clocking or actuation of the circuit component (T1) causing it to connect through.

4. The current regulation process according to any of the preceding claims, **characterised in that** the upwards converter input voltage (Vin,dc) is delivered directly, digitalised, to the calculation process as an input variable.

5. The current regulation process according to any of the preceding claims, **characterised in that** before the ideal/actual value comparison the actual value is averaged or subjected to other low pass filtering (RC).

6. The current regulation process according to any of the preceding claims, **characterised in that** the respective comparison result is displayed at the clock input of the circuit component (T1) as a binary decision which is made with pre-set switching hysteresis.

7. The current regulation process according to Claim 6, **characterised in that** the setting of the switching hysteresis for the pre-specified variation of the clocking or switching frequency is used for the circuit component (T1), in particular in the manner of a jitter.

8. The current regulation process according to Claim 7, **characterised by** a setting of the switching hysteresis such that with actual values changing with a slight increase the clock frequency is increased for the circuit component (T1).

9. A current regulation circuit for active filtering and/or for power factor correction comprising an upwards converter that has a circuit component (T1) that can be actuated by a clock and with a current-sensing resistor (Rs) for picking up an actual current value which is delivered to a summing point (S) in order to form a control difference with a current reference variable (F) so as to actuate the circuit component (T1) dependently upon this to track the input current of the upwards converter of its input voltage (Vin,dc) in order to implement the process according to any of the preceding claims, the circuit component (T1) being connected to the output of a comparator (OV) for its actuation or clocking, said comparator being formed and/or connected on the input side to compare the control difference with a reference signal (Vref), and
in order to generate the reference variable (F) there being a digital ideal value generator which is provided with or connected to interfaces (AD) for the digitalised recording of at least the analogue upwards converter input voltage (Vin,dc), **characterised in that** the digital ideal value generator for issuing digital/analogue converted output signals (F) is provided with or connected to an interface (PWM,R1,C1) which comprises a pulse width modulator (PWM) controlled by the data processing module and a low pass filter (R1, C1) downstream of the latter, and that the output signals (F) of the summing point (S) are delivered as the current reference variable (F), a data processing module for input and output data internal to the desired value device being connected between the input and output interfaces (AD;PWM,R1,C1).

10. The current regulation circuit according to Claim 9, **characterised in that** the interface (AD) for the digitalised recording of analogue input signals is connected to the input and/or output voltage (Vin,dc;Vo) of the upwards converter.

11. The current regulation circuit according to Claim 9 or 10, **characterised in that** the digital ideal value generator is realised by a microcontroller (µC) into which a pulse width modulator (PWM) and/or analogue/digital converter (AD) are structurally integrated.

12. The current regulation circuit according to any of the preceding claims, **characterised in that** a low pass filter (RC) is added between the current-sensing resistor (Rs) and the summing point (S).

13. The current regulation circuit according to any of the preceding claims, **characterised in that** the comparator (OV) is provided with or connected to a resistor network (Rx,Ry,Rz) that is formed in order to generate a comparator switching hysteresis.

14. The current regulation circuit according to Claim 13, **characterised in that** the reference signal (Vref) is delivered from a reference voltage source via the resistor network (Rx,Ry,Rz) to the comparator input.

15. The current regulation circuit according to Claim 14, **characterised by** dimensioning of the resistors (Rx,Ry,Rz) of the switching hysteresis resistor network such that with actual values that change with a small increase the clock frequency for the circuit component (T1) increases.

## Revendications

1. Procédé de régulation du courant pour le filtrage actif et et/ou la prérégulation du facteur de puissance en utilisant un convertisseur élévateur comportant un organe de commutation synchronisé (T1), dont le courant d'entrée est asservi à sa tension d'entrée (Vin.dc) au moyen de l'organe de commutation synchronisé (T1) et d'une comparaison valeur de consigne/valeur réelle exécutée en amont, dans lequel une différence de régulation est formée à partir d'une grandeur pilote (F) et d'une valeur réelle du courant d'entrée du convertisseur élévateur, l'organe de commutation (T1) étant synchronisé en fonction d'une comparaison entre la valeur respective de la différence de régulation et une valeur de référence (Vre), et
dans lequel, pour la génération de la grandeur pilote (F), on utilise un processus de calcul en technique numérique dont les grandeurs d'entrée sont tirées d'au moins une tension d'entrée analogique (Vin.dc) du convertisseur élévateur avec conversion analogique/numérique et, comme résultat de calcul, on produit un train d'impulsions (MIL) modulées en fonction des grandeurs d'entrée, **caractérisé en ce que** le train d'impulsions modulées (MIL) est converti en une valeur analogique puis est mis à disposition pour la formation de la différence de régulation, le train d'impulsions étant soumis à un calcul de moyenne pour la formation d'un signal continu analogique qui est utilisé comme grandeur pilote (F).

2. Procédé de régulation du courant selon la revendication 1, **caractérisé par** une combinaison avec une régulation et/ou une surveillance de la tension, où la tension de sortie du convertisseur élévateur (Vo) est transmise avec conversion analogique-numérique (AD) au processus de calcul en technique numérique en tant que grandeur d'entrée pour influencer le résultat du calcul numérique.

3. Procédé de régulation du courant selon la revendication 2, **caractérisé en ce que** le processus de calcul en technique numérique comprend des opérations telles que la réaction à une élévation de la tension de sortie du convertisseur élévateur (Vo) est une synchronisation ou une commande de l'organe de commutation (T1) pour la commutation de ce dernier.

4. Procédé de régulation du courant selon l'une des revendications précédentes, **caractérisé en ce que** la tension d'entrée (Vin,dc) du convertisseur élévateur est transmise directement en tant que grandeur d'entrée au processus de calcul sous forme numérisée.

5. Procédé de régulation du courant selon l'une des revendications précédentes, **caractérisé en ce qu'**avant la comparaison valeur de consigne/valeur réelle, la valeur réelle est soumise à un calcul de moyenne ou à un autre filtrage passe-bas (RC).

6. Procédé de régulation du courant selon l'une des revendications précédentes, **caractérisé en ce que** le résultat de la comparaison respectif est transmis à une entrée de rythme de l'organe de commutation (T1) sous la forme d'une décision binaire concernée par une hystérésis de commutation préalablement réglée.

7. Procédé de régulation de courant selon la revendication 6, **caractérisé en ce que** le réglage de l'hystérésis de commutation est utilisé pour une modification préalablement spécifiée de la fréquence de rythme ou de la fréquence de commutation de l'organe de commutation (T1) en particulier à la façon d'une gigue.

8. Procédé de régulation du courant selon la revendication 7, **caractérisé par** un réglage de l'hystérésis de commutation qui est tel qu'en présence de valeurs réelles qui varient avec une pente faible, la fréquence de rythme de l'organe de commutation (T1) augmente.

9. Circuit de régulation du courant pour le filtrage actif et/ou la prérégulation du facteur de puissance comprenant un convertisseur élévateur qui présente un organe de commutation (T1) pouvant être commandé de façon synchronisée, et comprenant une résistance de mesure du courant (RS) destinée à prélever une valeur réelle du courant qui est transmise à un étage additionneur (S) pour former une différence de régulation avec une grandeur pilote du courant (F), afin de commander sur cette base l'organe de commutation (T1) pour l'asservissement du courant d'entrée du commutateur élévateur à sa tension d'entrée (Vin.dc), destiné à l'exécution du procédé selon l'une des revendications précédentes, l'organe de commutation (T1) étant relié, pour sa commande ou sa synchronisation, à la sortie d'un comparateur (OV) qui est configuré et/ou câblé, côté entrée, pour réaliser la comparaison de la différence de régulation avec un signal de référence (Vref), et
dans lequel, pour générer la grandeur pilote (F), il est prévu un générateur de valeurs de consigne numérique qui est muni d'interfaces (AD) pour l'acquisition numérisée d'au moins la tension d'entrée analogique du convertisseur élévateur (Vin.dc) ou est connecté à de telles interfaces, **caractérisé en ce que** le générateur de valeurs de consigne numériques, pour émettre des signaux de sortie (F) convertis de numérique en analogique, est muni d'une interface (MIL,R1,C1), ou relié à une telle interface qui comprend un modulateur d'impulsions en largeur (MIL) commandé par le module de traitement de données, et un filtre passe-bas (R1,C1) placé en aval de ce module, et **en ce que** les signaux de sortie (F) sont transmis à l'étage additionneur (S) en tant que grandeurs pilotes du courant (F), un module de traitement de données pour les données d'entrée et de sortie qui est interne au générateur de valeurs de consigne étant interposé entre les interfaces d'entrée et de sortie (AD ; MIL, R1,C1)

10. Circuit de régulation du courant selon la revendication 9, **caractérisé en ce que**, pour l'acquisition numérisée de signaux d'entrée analogiques, l'interface (AD) est reliée à la tension d'entrée et/ou à la tension de sortie (Vin,dc ; Vo) du convertisseur élévateur.

11. Circuit de régulation du courant selon la revendication 9 ou 10, **caractérisé en ce que** le générateur numérique de valeurs de consigne est réalisé avec un microcontrôleur (µC) dans lequel un modulateur d'impulsions en largeur (MIL) et/ou un convertisseur analogique/numérique (AD) sont intégrés par construction.

12. Circuit de régulation du courant selon l'une des revendications précédentes, **caractérisé en ce qu'**un filtre passe-bas (RC) est inséré entre la résistance de mesure de courant (Rs) et l'étage additionneur (S).

13. Circuit de régulation du courant selon l'une des revendications précédentes, **caractérisé en ce que** le comparateur (OV) est muni d'un réseau de résistances (Rx,Ry,Rz), ou relié à un tel réseau, qui est configuré pour produire une hystérésis de commutation du comparateur.

14. Circuit régulateur de courant selon la revendication 13, **caractérisé en ce que** le signal de référence (Vref) est transmis d'une source de tension de référence à l'entrée du comparateur à travers le réseau de résistances (Rx,Ry,Rz).

15. Circuit régulateur de courant selon la revendication 14, **caractérisé par** un dimensionnement des résistances (Rx,Ry,Rz) du réseau de résistances d'hystérésis de commutation qui est tel qu'en présence de valeurs réelles qui varient avec une faible pente, la fréquence de rythme de l'organe de commutation (T1) augmente.
